# EUROPÄISCHE PATENTSCHRIFT

(11) **EP 2 869 947 B1**
(45) Veröffentlichungstag und Bekanntmachung des Hinweises auf die Patenterteilung: **15.03.2017**
(21) Anmeldenummer: 13727875.0
(22) Anmeldetag: 06.06.2013
(51) Int. Cl.: B21D 22/16, B21D 53/28, B21D 53/84, F16D 1/033, F16D 3/10, B21K 1/76, B21H 5/02

(54) **VERFAHREN ZUR HERSTELLUNG EINES VERBINDUNGSELEMENTS ZUR ÜBERTRAGUNG VON DREHBEWEGUNGEN SOWIE DADURCH HERGESTELLTES VERBINDUNGSELEMENT**
METHOD FOR PRODUCING A CONNECTING ELEMENT FOR TRANSMITTING ROTATIONAL MOVEMENTS AND CONNECTING ELEMENT PRODUCED THEREBY
PROCÉDÉ POUR PRODUIRE UN ÉLÉMENT DE CONNEXION POUR TRANSMETTRE DES MOUVEMENTS DE ROTATION ET ÉLÉMENT DE CONNEXION AINSI PRODUIT

(30) Priorität: 04.07.2012 DE 102012105958
(43) Veröffentlichungstag der Anmeldung: 13.05.2015
(73) Patentinhaber: ThyssenKrupp Steel Europe AG, 47166 Duisburg (DE)
(72) Erfinder: GÖVERT, Michael, 40789 Monheim (DE)
(74) Vertreter: ThyssenKrupp Intellectual Property GmbH
(86) Internationale Anmeldenummer: PCT/EP2013/061686
(87) Internationale Veröffentlichungsnummer: WO 2014/005789

(56) Entgegenhaltungen:
- EP-A1- 0 568 779
- DE-A1- 10 156 086
- DE-A1- 19 713 440
- DE-A1- 19 722 359
- DE-A1-102005 022 801
- DE-C2- 4 213 285

## Beschreibung

Die Erfindung betrifft ein Verfahren zur Herstellung eines Verbindungselements zur Übertragung von Drehbewegungen, wobei das Verbindungselement ein Gelenkaußenteil oder Flansch und einen Anschlusszapfen aufweist, gemäß dem Oberbegriff des Anspruchs 1. Daneben betrifft die Erfindung ein Verbindungselement mit einem Gelenkaußenteil oder einem Flansch und einem Anschlusszapfen, gemäß dem Oberbegriff des Anspruchs 8.

Verbindungselemente wie beispielsweise Anschlusszapfen werden benötigt, um drehende Wellen miteinander zu verbinden. Gattungsgemäße Anschlusszapfen werden für Gleichlauf-, Tripode- und auch Kreuzgelenke verwendet, um nicht parallel verlaufenden Drehachsen miteinander formschlüssig zu verbinden, so dass die Drehbewegungen von einer Achse auf die andere übertragen werden können. Üblicherweise sind Anschlusszapfen aus Stahl oder einem anderen Metall hergestellt. Anschlusszapfen, welche mit einem Gelenkaußenteil aus einem Rohling gefertigt werden, werden auch Gelenkzapfen genannt. Der Anschlusszapfen dient dazu Gelenke oder Gelenkwellen auf einer Seite beispielsweise mit einem Getriebe oder einem Antrieb zu verbinden. Der Anschlusszapfen umfasst beispielsweise eine innere und/oder äußere Verzahnung, ein Sicherungsringnut und/oder ein Gewinde. Darüber hinaus kann ein getriebeseitig verwendeter Anschluss- oder Gelenkzapfen über eine Lauffläche eines Simmerrings sowie Ölnuten verfügen. Das Gelenkaußenteil weist sogenannte Kugel- und Käfigbahnen auf, in welchen die im Inneren angeordneten Kugeln ihre relative Position zum Gelenkaußenteil verändern können.

Hierdurch wird ermöglicht, die Drehbewegung über die translatorische Bewegung der Kugeln innerhalb des Gelenkaußenteils in eine andere Richtung umzulenken. Darüber hinaus können weitere Funktionselemente wie beispielsweise ein ABS-Ring vorgesehen sein. Man hat nun festgestellt, dass die bisher eingesetzten üblicherweise mit einem Anschlusszapfen aus Vollmaterial versehenen Gelenkzapfen im Hinblick auf ihr Gewicht optimiert werden können. Darüber hinaus werden die Gelenkzapfen in der Regel aus Rohlingen durch ein Fließpressverfahren hergestellt, welches relativ aufwändig ist. Insbesondere müssen Funktionsflächen, beispielsweise die Kugelbahnen bzw. Käfigbahnen zum Teil spanabhebend hergestellt bzw. fertig gestellt werden. Hieraus resultiert eine relativ große Anzahl an Fertigungsschritten. Ein weiterer Nachteil ist es, dass für das Fließpressverfahren eine Mindestbanddicke gewährleistet sein muss. Eine spanabhebende Verringerung der Wanddicke ist zu kostenaufwändig. Im Ergebnis weisen Gelenkzapfen ein erhebliches Gewichtseinsparungspotential auf.

Aus der deutschen Patentschrift DE 42 13 285 C2 ist ein Verfahren zur Herstellung eines Gelenkaußenteils eines Gelenkzapfens eines Kugeldrehgelenks oder eines Tripodegelenks bekannt, bei welchem aus einer im Tiefziehverfahren vorgeformten Platine oder aus einem vorgeformten Rohrkörper die Bereiche der Kugel- oder Rollenbahnen ausschließlich in den jeweiligen Kantenbereichen der Kugel- und Rollenbahnen radial über rollende Außenwerkzeuge umgeformt werden. Zwar lässt das Tiefziehverfahren oder das Herstellverfahren für das Gelenkaußenteil aus einem Rohrkörper grundsätzlich eine Verringerung der Wanddicke zu, jedoch kann diese nicht belastungsgerecht ausgelegt werden, da diese beim Tiefziehverfahren im Wesentlichen konstant bleibt. Darüber hinaus muss das Gelenkaußenteil noch mit dem Anschlusszapfen in einem weiteren Arbeitsschritt stoffschlüssig verbunden werden. Insgesamt ist also die Herstellung des Gelenkzapfens ebenfalls aufwändig.

Hiervon ausgehend liegt der vorliegenden Erfindung die Aufgabe zugrunde, ein Verfahren zur Herstellung eines Verbindungselements mit einem Gelenkaußenteil oder Flansch und einem Anschlusszapfen zur Verfügung zu stellen, mit welchem auf einfache Weise gewichtsoptimierte Verbindungselemente hergestellt werden können. Darüber hinaus liegt der vorliegenden Erfindung die Aufgabe zugrunde, einen entsprechend gewichtsoptimiertes Verbindungselement vorzuschlagen.

Gemäß einer ersten Lehre der vorliegenden Erfindung wird die oben aufgezeigte Aufgabe durch ein Verfahren gemäß Anspruch 1 gelöst.

Es hat sich herausgestellt, dass durch Anwendung des Drückwalzens oder des Fließdrückwalzens nicht nur die komplexe Geometrie des Verbindungselementes hoch präzise hergestellt werden kann. Die Wanddicke kann auf das technisch notwendige Minimum reduziert werden, so dass eine deutliche Gewichtsersparnis erreicht wird. Es hat sich auch herausgestellt, dass das Verfahren hoch automatisiert durchgeführt werden kann und gleichzeitig eine enorme Flexibilität im Hinblick auf die Ausgestaltung des Verbindungselements bietet. Beim Drückwalzen bzw. beim Fließdrückwalzen wird der ronden- oder rohrförmige Rohling in Rotation versetzt und über gleichzeitig rotierende Drückwalzen durch Drücken umgeformt. Die Drückwalzen können dabei auch zu einer deutlichen Oberflächenvergrößerung und zu einem Fließen des Werkstoffs führen. Das Fließdrückwalzen unterscheidet sich daher vom Drückwalzen lediglich dadurch, dass die Umformgrade beim Fließdrückwalzen deutlich größer sind als beim Drückwalzen. Obwohl in der vorliegenden Patentanmeldung zwischen dem Drückwalzen und dem Fließdrückwalzen unterschieden wird, sind die Übergänge zwischen beiden Verfahren fließend. Darüber hinaus ist selbstverständlich die Kombination eines Drückwalzens zusammen mit einem Fließdrückwalzen zur Herstellung des Verbindungselements aus einem ronden- oder rohrförmigen Rohling denkbar. Diese Kombination soll in mit der oder-Verknüpfung der beiden Verfahrensschritte eingeschlossen sein.

Erfindungsgemäß werden unter Anwendung des Drückwalzens oder Fließdrückwalzens radial umlaufende Bereiche mit in Längsrichtung variierender Wanddicke im Verbindungselement erzeugt. Hierdurch wird es möglich, die Wanddicke des Verbindungselements, also die Wanddicke des Gelenkaußenteils oder Flanschs und des Anschlusszapfens belastungsgerecht auszulegen. Über das Herstellverfahren, d.h. die Anwendung des Drückwalzens oder Fließdrückwalzens kann die Wanddicke spezifisch auf die Belastungssituation an der jeweiligen Stelle des Verbindungselements variiert werden, so dass ein noch weiter gewichtsoptimiertes Verbindungselement hergestellt werden kann.

Eine besonders gute Materialausnutzung wird gemäß einer weiteren Ausgestaltung dadurch erreicht, dass ein ronden- oder rohrförmiger Rohling zum Verbindungselement umgeformt wird, welcher ein im Wesentlichen gleiches Materialvolumen wie das Verbindungselement aufweist. In diesem Fall ist der Materialverbrauch bei der Herstellung des Verbindungselementes besonders gering.

Gemäß einer weiteren bevorzugten Ausgestaltung des erfindungsgemäßen Verfahrens 13 wird unter Anwendung des Drückwalzens oder des Fließdrückwalzens ein hohler Anschlusszapfen aus dem Rohling hergestellt.

Ein hohler Anschlusszapfen bietet bereits eine deutliche Gewichtsreduzierung im Vergleich zu Anschlusszapfen aus Vollmaterial.

Unter Anwendung des Drückwalzens oder Fließdrückwalzens werden Funktionselemente des Verbindungselementes, insbesondere Verzahnungen, ABS-Ringe, Sicherungsnute, Flansche und/oder Gewinde des Verbindungselements im Rohling erzeugt. Verzahnungen können an jeder beliebigen Stelle des Verbindungselements durch rotierende Drückwerkzeuge, beispielsweise exzentrisch rotierende Drückwerkzeuge erzeugt werden. Gleiches gilt auch für die Bereitstellung von Kugel-, Käfigbahnen, ABS-Ringen, Sicherungsnuten, Gelenkaußenteile, Flanschen oder Gewinden. Es besteht auch die Möglichkeit, andere Funktionselemente durch die Anwendung des Drückwalzens oder des Fließdrückwalzens im Verbindungselement zu erzeugen.

Beispielsweise wird gemäß einem weiteren Ausführungsbeispiel des erfindungsgemäßen Verfahrens die Verzahnung der ABS-Ringe unter Anwendung des Drückwalzens oder Fließdrückwalzens eingebracht.

Werden die Drückwalz- und/oder Fließdrückwalzarbeitsschritte in einer einzigen Arbeitsstation mit wechselnden Drückwalz- oder Fließdrückwalzwerkzeugen durchgeführt, ist eine besonders kostengünstige und automatisierte Herstellung der Verbindungselemente möglich.

Schließlich besteht die Möglichkeit, den aus dem ronden- oder rohrförmigen Rohling hergestellten Verbindungselement zu einem Gelenkzapfen eines Tripodegelenks umzuformen. Hierzu sind in der Regel weitere Verfahrensschritte notwendig. Vorzugsweise werden diese in der gleichen Arbeitsstation durchgeführt.

Gemäß einer zweiten Lehre der vorliegenden Erfindung wird die oben aufgezeigte Aufgabe durch ein Verbindungselement gemäß Anspruch 8 gelöst.

Ein entsprechend ausgebildetes Verbindungselement kann insbesondere eine belastungsgerecht ausgelegte Wanddicke aufweisen, so dass sein Gewicht optimal an die Belastungen angepasst werden kann. Hierdurch wird ein erhebliches Gewichtseinsparungspotential realisiert, was beispielsweise bei Kraftfahrzeugen zur Verringerung des Treibstoffverbrauchs führt. Gleichzeitig kann mit dem erfindungsgemäßen Verbindungselement das Trägheitsmoment von beispielsweise Gelenkwellen aufgrund der reduzierten Massen weiter verringert werden, ohne die Steifigkeit des Verbindungselements zu verringern.

Gemäß einer weiteren bevorzugten Ausgestaltung des erfindungsgemäßen Verbindungselements sind ein hohler Anschlusszapfen, mindestens eine Verzahnung, ABS-Ringe, Flansche, Gelenkaußenteile, Sicherungsnute und/oder Gewinde vorzugsweise hergestellt durch Anwendung des Drückwalzens oder Fließdrückwalzens vorgesehen. Wie bereits zuvor ausgeführt, können die durch die Anwendung des Drückwalzens oder Fließdrückwalzens erzeugten Funktionselemente auf einfache Weise bereitgestellt werden, so dass die Kosten des erfindungsgemäßen Verbindungselements besonders gering sind. Gleichzeitig ermöglicht die Verwendung des Drückwalzens oder Fließdrückwalzens eine enorme Flexibilität im Hinblick auf die Ausbildung von Funktionselementen sowie auf eine automatisierte Fertigung.

Schließlich weist das dem Anschlusszapfen gegenüberliegende Ende des Verbindungselements gemäß einer weiteren bevorzugten Ausführungsform des Verbindungselements eine radial umlaufende Materialverdickung auf. Zusätzlich können optional radial umlaufend gleichmäßig verteilte Gewindebohrungen an diesem Ende des Verbindungselements vorgesehen sein. Über die dem Anschlusszapfen gegenüberliegenden Ende des Verbindungselements auf der Flanschseite vorgesehene Materialverdickung kann die Stabilität im Anschlussbereich des Flansches stark verbessert werden, so dass entsprechend der Belastung des Flansches eine spezifische Wanddicke vorgesehen ist. Dies ermöglicht auch die einfache Anordnung von radial umlaufend gleichmäßig verteilten Gewindebohrungen in diesem Bereich, da ausreichend Material für eine stabile Schraubverbindung vorgesehen ist. Neben der mechanisch lösbaren Variante ist auch eine stoffschlüssige (Schweiß-) Verbindung in diesem Bereich denkbar.

Im Weiteren soll die Erfindung anhand von Ausführungsbeispielen in Verbindung mit der Zeichnung näher erläutert werden. In der Zeichnung zeigt
- Fig. 1: in einer schematischen Schnittansicht die Durchführung eines Drückwalzens bzw. Fließdrückwalzens und
- Fig. 2 bis 7: Ausführungsbeispiele erfindungsgemäßer Verbindungselemente.

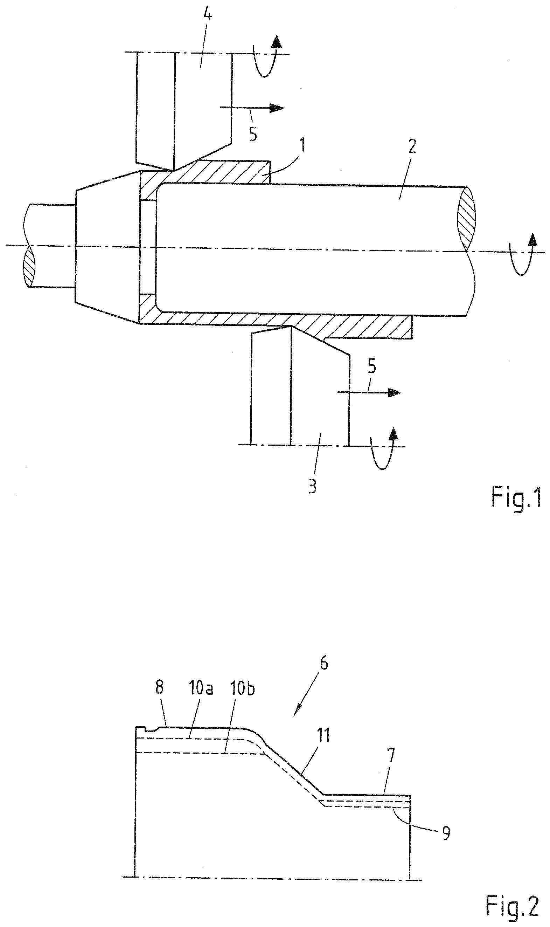

Figur 1 zeigt nun in einer Prinzipskizze die Durchführung eines Drück- bzw. Fließdrückwalzens eines rohrförmigen Rohlings 1, welcher beispielsweise über eine Ronde oder einen Rohrabschnitt bereitgestellt werden kann. Der innenliegende Dorn 2 gibt die Außenform vor, auf welche die ebenfalls rotierenden Drückwalzen 3, 4, die jeweils zur Hälfte nur dargestellt sind, den Rohling drücken. Die Drückwalzen 3, 4 werden dabei in Vorschubrichtung 5 vorgeschoben und beispielsweise entsprechend der Kontur des Dorns 2 verschoben, so dass der Rohling 1 entsprechend verformt wird. Ausgehend von diesem Herstellprinzip ist leicht vorstellbar, dass beliebige rotationssymmetrische Formen, insbesondere radial umlaufend vorgesehene Materialverdickungen und Verjüngungen über die in Fig. 1 dargestellten Drückwalzen 3, 4 erzeugt werden können. Über exzentrisch rotierende Werkzeuge, die anstelle der Drückwalzen 3, 4 eingesetzt werden können, können beliebig andere Formen im Rohling durch Drücken erzeugt werden.

Beispielsweise zeigt Fig. 2 ein erstes Ausführungsbeispiel eines erfindungsgemäßen Verbindungselements 6, welches einen Anschlusszapfen 7, in Form eines Gelenkwellenanschlusszapfens und ein Gelenkaußenteil 8 aufweist. Der Anschlusszapfen 7 weist eine Verzahnung 9 auf, von welcher lediglich eine einzige Vertiefung im Anschlusszapfen 7 in Fig. 2 dargestellt ist. Gleiches gilt auch für das Gelenkaußenteil 8. Das Gelenkaußenteil 8 weist in der Regel eine Mehrzahl an Kugelbahnen sowie eine Käfigbahn 10a, 10b auf. In Fig. 2 ist wiederum nur eine Kugelbahn 10a dargestellt. Der Übergangsbereich 11 zwischen dem Anschlusszapfen 7 und dem Gelenkaußenteil 8 des Gelenkzapfens 6 kann mit dem erfindungsgemäßen Verfahren in Hinblick auf die Wanddicke optimal, d.h. möglichst dünn ausgestaltet, werden, um eine Gewichtsreduzierung zu erzielen. Hierdurch wird das Gewicht des Gelenkaußenteils deutlich reduziert. Auch die Trägheitsmomente werden aufgrund der verringerten Massen deutlich verringert.

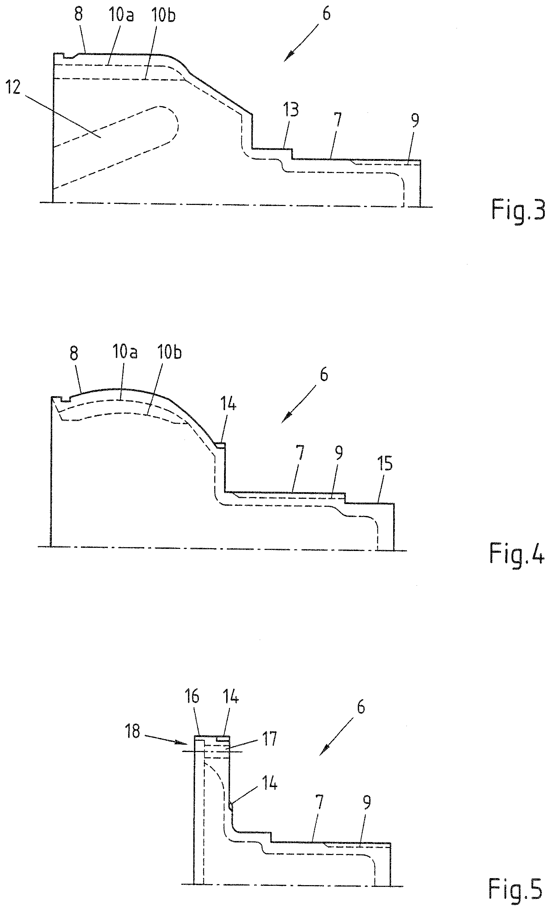

Welche Funktionselemente ein erfindungsgemäßes Verbindungselement weiter aufweisen kann, ist in Fig. 3 schematisch dargestellt. Aufgrund der Symmetrie des Verbindungselements 6 ist jeweils nur die eine Hälfte des rotationssymmetrischen Verbindungselements 6 gezeigt. In dem in Fig. 3 dargestellten Verbindungselement 6 sind beispielhaft schräg verlaufende Kugelbahnen 12, von welchen beispielsweise sechs oder acht üblicherweise vorgesehen sind, dargestellt. Die Kugelbahnen 12 werden ebenfalls durch ein Drück- und/oder Fließdrückwalzen in das Gelenkaußenteil 8 des Verbindungselements 6 eingebracht und können hochpräzise hergestellt werden. Die Wanddicke im Bereich des Übergangs zwischen Anschlusszapfen und Gelenkaußenteil ist auch hier wiederum minimal ausgebildet, um das Gewicht des Verbindungselements zu reduzieren. Gleichzeitig ist zu erkennen, dass der Anschlusszapfen 7 (Gelenkanschlusszapfen) in Fig. 3 hohl ausgebildet ist und Verzahnungen 9 sowie Dickensprünge 13 aufweist.

Das nächste Ausführungsbeispiel eines erfindungsgemäßen Verbindungselements 6 in Fig. 4 weist einen Anschlusszapfen 7 (Gelenkanschlusszapfen) auf, welcher einerseits eine Verzahnung 9 besitzt und darüber hinaus am Ende des Anschlusszapfens 7 ein über das Drückwalzen bzw. Fließdrückwalzen erzeugtes Gewinde 15 aufweist. Der Anschlusszapfen 7 selbst ist hier wiederum hohl ausgeführt und besitzt im Übergangsbereich zum Gelenkaußenteil 8 einen ABS-Ring 14. Die Kugelbahnen 10a und Käfigbahn 10b wurden ebenfalls unter Anwendung des Drückwalzens oder Fließdrückwalzens erzeugt.

In dem nächsten in Fig. 5 dargestellten Ausführungsbeispiel eines erfindungsgemäßen Verbindungselements 6 ist an dem dem Anschlusszapfen 7 gegenüberliegenden Ende des Verbindungselements 6 radial außen eine Materialverdickung 16 vorgesehen, der als Flansch 18 ausgebildet ist, um in diesen Bereich umlaufend Gewindebohrungen anzuordnen. Der Anschlusszapfen 7 ist hier als Gelenkanschlusszapfen ausgebildet. Hierdurch wird eine einfache Verbindung mit einer Drehachse erreicht. Der ABS-Ring 14 ist in dem vorliegenden Ausführungsbeispiel am dem dem Anschlusszapfen 7 gegenüberliegenden Ende des Verbindungselements 6 angeordnet. Darüber hinaus ist eine alternative Position des ABS-Rings 14 am Übergangsbereich zum Flansch angedeutet. Fig. 5 ist zudem zu entnehmen, dass die Wanddicke des Verbindungselements 6 spezifisch an die Belastungen in dem jeweiligen Bereich angepasst ist und in Längsrichtung variiert.

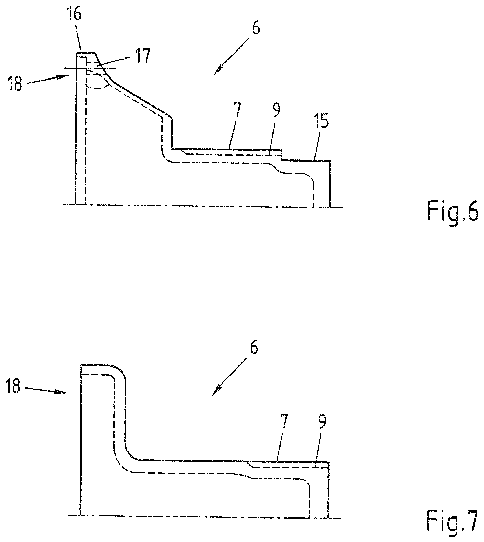

Dies gilt auch für das Ausführungsbeispiel aus Fig. 6, welches eine Materialanhäufung 16 an dem dem Anschlusszapfen 7 gegenüberliegenden Ende aufweist und in diesem Bereich zusätzlich Gewindebohrungen vorgesehen sind. Der Anschlusszapfen 7 ist hier in Form eines Profilwellenanschlusszapfens ausgebildet. Die Verzahnung 9 des Anschlusszapfens 7 kann ebenfalls auf einfache Weise durch Drückwalzen oder Fließdrückwalzen im Bauteil erzeugt werden. Gleiches gilt auch für das Gewinde 15, welches auch in der Ausführungsform aus Fig. 6 vorgesehen ist. Das in Fig. 7 dargestellte Ausführungsbeispiel stellt auf der Flanschseite 18 keine Bohrung zur mechanischen Anbindung weiterer Bauteile zur Verfügung, sondern ist als Anschweißflansch zur stoffschlüssigen Anbindung von beispielsweise Profilwellen bzw. Kardanwellen für Kugelgelenke vorgesehen. Ebenfalls ist in den Fig. 5 und 6 gemeinsam, dass der Anschlusszapfen 7 hohl ausgebildet ist. Alle Arbeitsschritte, ausgenommen die Gewindebohrungen lassen sich üblicherweise in einer Drückwalz- bzw. Fließdrückwalzvorrichtung ausführen, so dass eine hoch automatisierte Fertigung gewährleistet ist. Dazu ermöglicht das Drückwalzen bzw. das Fließdrückwalzen, dass die Materialdicke im Fertigteil in spezifischen Bereichen nur noch 1,5 mm bis 2 mm oder weniger beträgt, so dass diese Bereiche an die Belastungen gut angepasst sind.

## Patentansprüche

1. Verfahren zur Herstellung eines Verbindungselements (6) zur Übertragung von Drehbewegungen für eine Gelenkwelle, wobei das Verbindungselement (6) ein Gelenkaußenteil (8) oder Flansch (18) und einen Anschlusszapfen (7) aufweist,
**dadurch gekennzeichnet, dass** ein ronden- oder rohrförmiger Rohling (1) durch Drückwalzen oder Fließdrückwalzen zum Verbindungselement (6) umgeformt wird und unter Anwendung des Drückwalzens oder Fließdrückwalzens Kugelbahnen (10a, 12) und/oder Käfigbahn (10b) im Rohling (1) erzeugt werden, wobei unter Anwendung des Drückwalzens oder Fließdrückwalzens radial umlaufende Bereiche mit in Längsrichtung variierender Wanddicke im Verbindungselement (6) erzeugt werden.

2. Verfahren nach Anspruch 1,
**dadurch gekennzeichnet, dass** ein ronden- oder rohrförmiger Rohling (1) zum Verbindungselement (6) umgeformt wird, welcher ein im Wesentlichen gleiches Materialvolumen wie das Verbindungselement (6) aufweist.

3. Verfahren nach Anspruch 1 oder 2,
**dadurch gekennzeichnet, dass** unter Anwendung des Drückwalzens oder Fließdrückwalzens ein hohler Anschlusszapfen (7) hergestellt wird.

4. Verfahren nach einem der Ansprüche 1 bis 3,
**dadurch gekennzeichnet, dass** unter Anwendung des Drückwalzens oder Fließdrückwalzens Funktionselemente des Verbindungselements (6), insbesondere Verzahnungen (9), ABS-Ringe (14), Flansche, Ölnuten, Sicherungsringnuten und/oder Gewinde (15) des Verbindungselements (6) im Rohling (1) erzeugt werden.

5. Verfahren nach einem der Ansprüche 1 bis 4,
**dadurch gekennzeichnet, dass** die Verzahnung der ABS-Ringe (14) unter Anwendung des Drückwalzens oder Fließdrückwalzens eingebracht werden.

6. Verfahren nach einem der Ansprüche 1 bis 5,
**dadurch gekennzeichnet, dass** die Drückwalz- oder Fließdrückwalzarbeitsschritte in einer einzigen Arbeitsstation mit wechselnden Drückwalz- oder Fließdrückwalzwerkzeugen durchgeführt werden.

7. Verfahren nach einem der Ansprüche 1 bis 6,
**dadurch gekennzeichnet, dass** ein Verbindungselement (6) als Gelenkzapfen eines Tripodegelenks hergestellt wird.

8. Verbindungselement (6) mit einem Gelenkaußenteil (8) oder Flansch (18) und einem Anschlusszapfen (7), insbesondere hergestellt mit einem Verfahren nach einem der Ansprüche 1 bis 7,
**dadurch gekennzeichnet, dass** das Gelenkaußenteil (8) oder Flansch (18) radial umlaufende Bereiche mit in Längsrichtung variierender Wanddicke aufweist und Kugelbahnen (10a, 12) und/oder Käfigbahn (10b) hergestellt durch Anwendung des Drückwalzens oder Fließdrückwalzens vorgesehen sind.

9. Verbindungselement nach Anspruch 8,
**dadurch gekennzeichnet, dass** ein hohler Anschlusszapfen (7), mindestens eine Verzahnung (9), ABS-Ringe (14), Flansche und/oder Gewinde (15) vorzugsweise hergestellt durch Anwendung des Drückwalzens oder Fließdrückwalzens vorgesehen sind.

10. Verbindungselement nach Anspruch 8 oder 9,
**dadurch gekennzeichnet, dass** das dem Anschlusszapfen (7) gegenüberliegende Ende des Gelenkzapfens eine radial umlaufende Materialverdickung (16) aufweist.

11. Verbindungselement nach einem der Ansprüche 8 bis 10,
**dadurch gekennzeichnet, dass** radial umlaufend gleichmäßig verteilte Gewindebohrungen (17) an dem Anschlusszapfen (7) gegenüberliegenden Ende des Verbindungselements (6) vorgesehen sind.

12. Verbindungselement nach einem der Ansprüche 8 bis 10,
**dadurch gekennzeichnet, dass** die Flanschseite (18) als Anschweißflansch ausgebildet ist.

## Claims

1. Method for producing a connecting element (6) for transmitting rotational movements for an articulated shaft, wherein the connecting element (6) has a joint outer part (8) or flange (18) and a connecting pin (7),
**characterized in that**
a round-like or tubular blank (1) is formed by flow forming or flow turning to form the connecting element (6) and ball raceways (10a, 12) and/or a cage raceway (10b) are produced in the blank (1) using flow forming or flow turning, wherein radially circumferential regions whose wall thickness varies in the longitudinal direction are produced in the connecting element (6) using flow forming or flow turning.

2. Method according to Claim 1,
**characterized in that**
a round-like or tubular blank (1), having essentially the same material volume as the connecting element (6), is deformed to form the connecting element (6).

3. Method according to Claim 1 or 2,
**characterized in that**
a hollow connecting pin (7) is produced using flow forming or flow turning.

4. Method according to one of Claims 1 to 3,
**characterized in that**
functional elements of the connecting element (6), in particular toothings (9), ABS rings (14), flanges, oil grooves, securing ring grooves and/or threads (15) of the connecting element (6) are produced in the blank (1) using flow forming or flow turning.

5. Method according to one of Claims 1 to 4,
**characterized in that**
the toothing of the ABS rings (14) is introduced by flow forming or flow turning.

6. Method according to one of Claims 1 to 5,
**characterized in that**
the flow forming or flow turning steps are carried out in a single station with alternating flow forming and flow turning tools.

7. Method according to one of Claims 1 to 6,
**characterized in that**
a connecting element (6) in the form of a pivot pin of a tripod joint is produced.

8. Connecting element (6) with a joint outer part (8) or flange (18) and a connecting pin (7), in particular produced with a method according to one of Claims 1 to 7,
**characterized in that**
the joint outer part (8) or flange (18) has radially circumferential regions whose wall thickness varies in the longitudinal direction and ball raceways (10a, 12) and/or a cage raceway (10b) produced using flow forming or flow turning.

9. Connecting element according to Claim 8,
**characterized in that**
there are provided a hollow connecting pin (7), at least one toothing (9), ABS rings (14), flanges and/or threads (15), preferably produced using flow forming or flow turning.

10. Connecting element according to Claim 8 or 9,
**characterized in that**
the opposite end of the pivot pin from the connecting pin (7) has a radially circumferential increase in material thickness (16).

11. Connecting element according to one of Claims 8 to 10,
**characterized in that**
threaded bores (17) distributed uniformly in a radially circumferential manner are provided at the opposite end of the connecting element (6) from the connecting pin (7).

12. Connecting element according to one of Claims 8 to 10,
**characterized in that**
the flange side (18) is configured as a weld-on flange.

## Revendications

1. Procédé pour produire un élément de connexion (6) pour transmettre des mouvements de rotation pour un arbre articulé, dans lequel l'élément de connexion (6) est une partie extérieure d'articulation (8) ou un flanc (18) et présente un tourillon de raccordement (7), **caractérisé en ce que** l'on déforme une ébauche ronde ou tubulaire (1) par fluotournage ou fluotournage-repoussage en un élément de connexion (6) et on produit dans l'ébauche (1) des pistes de billes (10a, 12) et/ou une piste de cage (10b) par application du fluotournage ou du fluotournage-repoussage, dans lequel on produit dans l'élément de connexion (6) des régions radialement périphériques avec une épaisseur de paroi variant en direction longitudinale par application du fluotournage ou du fluotournage-repoussage.

2. Procédé selon la revendication 1, **caractérisé en ce que** l'on déforme en un élément de connexion (6) une ébauche ronde ou tubulaire (1), qui présente un volume de matière essentiellement égal à celui de l'élément de connexion (6).

3. Procédé selon la revendication 1 ou 2, **caractérisé en ce que** l'on fabrique un tourillon de raccordement creux (7) par application du fluotournage ou du fluotournage-repoussage.

4. Procédé selon l'une quelconque des revendications 1 à 3, **caractérisé en ce que** l'on produit dans l'ébauche (1), par application du fluotournage ou du fluotournage-repoussage, des éléments fonctionnels de l'élément de connexion (6), en particulier des dentures (9), des bagues ABS (14), des flancs, des rainures à huile, des rainures pour bagues de sécurité et/ou des filets (15) de l'élément de connexion (6).

5. Procédé selon l'une quelconque des revendications 1 à 4, **caractérisé en ce que** l'on réalise la denture des bagues ABS (14) par application du fluotournage ou du fluotournage-repoussage.

6. Procédé selon l'une quelconque des revendications 1 à 5, **caractérisé en ce que** l'on exécute les opérations de fluotournage ou de fluotournage-repoussage dans une seule station de travail avec des outils de fluotournage ou de fluotournage-repoussage interchangeables.

7. Procédé selon l'une quelconque des revendications 1 à 6, **caractérisé en ce que** l'on fabrique un élément de connexion (6) sous forme de pivot d'une articulation tripode.

8. Elément de connexion (6) avec une partie extérieure d'articulation (8) ou un flanc (18) et un tourillon de raccordement (7), fabriqué en particulier avec un procédé selon l'une quelconque des revendications 1 à 7, **caractérisé en ce que** la partie extérieure d'articulation (8) ou le flanc (18) présente des régions radialement périphériques avec une épaisseur de paroi variant en direction longitudinale et/ou il est prévu des pistes de billes (10a, 12) et/ou une piste de cage (10b) fabriquées par application du fluotournage ou du fluotournage-repoussage.

9. Elément de connexion selon la revendication 8, **caractérisé en ce qu'**il est prévu au moins un tourillon de raccordement creux (7), une denture (9), des bagues ABS (14), des flancs et/ou des filets (15), fabriqués de préférence par application du fluotournage ou du fluotournage-repoussage.

10. Elément de connexion selon la revendication 8 ou 9, **caractérisé en ce que** l'extrémité du pivot opposée au tourillon de raccordement (7) présente une surépaisseur de matière radialement périphérique (16).

11. Elément de connexion selon une des revendications 8 à 10, **caractérisé en ce qu'**il est prévu des trous filetés (17) uniformément répartis en périphérie radiale à l'extrémité de l'élément de connexion (6) opposée au tourillon de raccordement (7).

12. Elément de connexion selon une des revendications 8 à 10, **caractérisé en ce que** le côté de le flanc (18) est réalisé comme un flanc à souder.
